# FASCICULE DE BREVET EUROPEEN

(11) **EP 3 690 405 B1**
(45) Date de publication et mention de la délivrance du brevet: **08.11.2023**
(21) Numéro de dépôt: 20154251.1
(22) Date de dépôt: 29.01.2020
(51) Int. Cl.: G01D 3/036, G01L 9/02

(54) **CAPTEUR POUR LA MESURE D'UNE PREMIERE GRANDEUR PHYSIQUE DONT LA MESURE EST INFLUENCEE PAR UNE DEUXIEME GRANDEUR PHYSIQUE**
SENSOR FÜR DIE MESSUNG EINER ERSTEN PHYSIKALISCHEN GRÖSSE, DEREN MESSUNG VON EINER ZWEITEN PHYSIKALISCHEN GRÖSSE BEEINFLUSST IST
SENSOR FOR MEASURING A FIRST PHYSICAL QUANTITY, THE MEASUREMENT OF WHICH IS INFLUENCED BY A SECOND PHYSICAL QUANTITY

(30) Priorité: 29.01.2019 FR 1900777
(43) Date de publication de la demande: 05.08.2020
(73) Titulaire: ArianeGroup SAS, 78130 Les Mureaux (FR)
(72) Inventeur: HOURDEAUX, Franck, 33185 LE HAILLAN (FR); ALBENTOSA, Clément, 33185 LE HAILLAN (FR)
(74) Mandataire: Cabinet Beau de Loménie

(56) Documents cités:
- EP-A1- 3 124 935
- US-A- 4 320 664
- US-A- 4 418 392
- US-A- 4 592 002
- US-A1- 2011 308 321
- US-A1- 2018 259 409

## Description

### Domaine Technique

La présente invention se rapporte au domaine général des capteurs, et plus particulièrement des capteurs qui mesurent une grandeur physique et dont la mesure est influencée par les variations d'une autre grandeur physique.

La présente invention peut typiquement être utilisée dans le domaine des capteurs de pression, et notamment les capteurs de pression utilisés dans l'aérospatiale ou l'aéronautique.

### Technique antérieure

Actuellement les capteurs de pression utilisés dans l'aérospatiale mesurent la pression d'une enceinte en mesurant les déformations d'un élément sensible à la pression. Or, les propriétés mécaniques de déformations de l'élément sensible varient selon la température de l'élément sensible.

Ainsi, afin d'obtenir une mesure précise de la pression, il est nécessaire de mesurer la température de l'élément sensible et d'intégrer la température mesurée au calcul de détermination de la pression à partir de la déformation de l'élément sensible.

Il est connu qu'un système de contrôle d'un lanceur spatial ou d'un aéronef réalise un calcul de compensation pour chacun des capteurs auquel ledit système de contrôle est relié. Cette solution rencontre toutefois l'inconvénient que les données propre à chaque capteur, comme par exemple les dérives individuelles des capteurs en fonction de la température, doivent être rentrées dans le système de contrôle. En outre, lorsqu'un capteur doit être changé dans le cadre de la gestion de configuration du système, par exemple en cas de défaut, les données enregistrées dans le système de contrôle doivent être remises à jour.

Le document EP 3 124 935 A1 décrit un capteur de pression compensé en température en utilisant un capteur de température.

### Exposé de l'invention

La présente invention a donc pour but principal de fournir une solution simple répondant aux problèmes décrits précédemment.

Selon un premier aspect, l'invention concerne un capteur pour la mesure d'une première grandeur physique dont la mesure est influencée par une deuxième grandeur physique, ledit capteur comprenant un corps de capteur à l'intérieur duquel sont installés :
- un premier élément sensible configuré pour mesurer la première grandeur physique ;
- un deuxième élément sensible configuré pour mesurer la deuxième grandeur physique ;
- une mémoire sur laquelle est enregistrée une table de compensation qui détermine une valeur corrigée de la première grandeur physique en fonction de la valeur mesurée de la première grandeur physique par le premier élément sensible et de la valeur mesurée de la deuxième grandeur physique par le deuxième élément sensible ;
- une unité de traitement qui est reliée au premier élément sensible, au deuxième élément sensible et à la mémoire, l'unité de traitement étant configurée pour générer un signal de mesure du capteur correspondant à la valeur corrigée de la première grandeur physique à partir de la valeur mesurée de la première grandeur physique par le premier élément sensible, de la valeur mesurée de la deuxième grandeur physique par le deuxième élément sensible, et de la table de compensation.

Selon l'invention, le capteur comprend un composant chauffant qui est configuré pour chauffer l'unité de traitement et un capteur de température qui est configuré pour mesurer la température de l'unité de traitement, le composant chauffant et le capteur de température étant reliés à l'unité de traitement, l'unité de traitement étant configurée pour contrôler ledit composant chauffant pour maintenir la température de l'unité de traitement supérieure à une valeur seuil.

Selon une caractéristique possible, le composant chauffant comprend au moins une résistance, l'unité de traitement étant configurée pour contrôler l'alimentation électrique de la résistance pour maintenir la température de l'unité de traitement supérieure à la valeur seuil.

Selon une caractéristique possible, la au moins une résistance est noyée dans une couche de matériau conducteur thermiquement disposée sur un boîtier de l'unité de traitement.

Selon une caractéristique possible, le capteur est un capteur de pression, la première grandeur physique étant une pression et la deuxième grandeur physique étant une température du premier élément sensible.

Selon une caractéristique possible, le premier élément sensible est un élément sensible à couche mince à jauges extensométriques ou un microsystème électromécanique (MEMS).

Selon une caractéristique possible, le premier élément sensible comprend quatre résistances formant un pont de Wheatstone, le premier élément sensible comprenant également un circuit de compensation pour compenser la différence de valeur de résistance entre les résistances de pont de Wheatstone.

Selon une caractéristique possible, le premier élément sensible génère un premier signal de mesure analogique et le deuxième élément sensible génère un deuxième signal de mesure analogique, le capteur comprenant un premier convertisseur analogique/numérique qui est configuré pour convertir le premier signal de mesure analogique en un premier signal de mesure numérique et transmettre ledit premier signal de mesure numérique à l'unité de traitement, le capteur comprenant également un deuxième convertisseur analogique/numérique qui est configuré pour convertir le deuxième signal de mesure analogique en un deuxième signal de mesure numérique et transmettre ledit deuxième signal de mesure numérique à l'unité de traitement.

Selon une caractéristique possible, le capteur comprend un premier composant de filtrage et d'amplification qui est configuré pour filtrer et amplifier le premier signal de mesure analogique avant la conversion analogique/numérique dudit premier signal de mesure, et un deuxième composant de filtrage et d'amplification qui est configuré pour filtrer et amplifier le deuxième signal de mesure analogique avant la conversion analogique/numérique dudit deuxième signal de mesure.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif.
[Fig. 1] La figure 1 représente schématiquement un système comprenant un capteur d'une première grandeur physique dont la mesure est influencée par une deuxième grandeur physique.
[Fig. 2] La figure 2 représente schématiquement un capteur de pression dont la mesure est influencée par la température.
[Fig. 3] La figure 3 représente schématiquement une table de compensation entre la pression et la température.

### Description des modes de réalisation

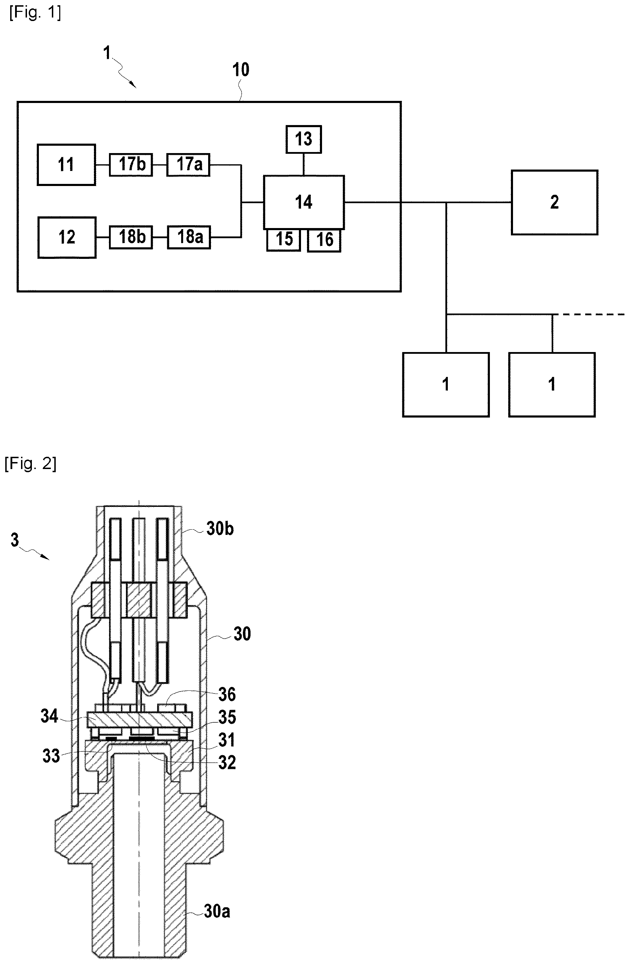

Comme représenté sur la figure 1, un capteur 1 d'une première grandeur physique dont la mesure est influencée par une deuxième grandeur physique comprend un corps de capteur 10 à l'intérieur duquel sont situés d'une part un premier élément sensible 11 qui est configuré pour mesurer la première grandeur physique, et d'autre part un deuxième élément sensible 12 qui est configuré pour mesurer la deuxième grandeur physique.

Le premier signal de mesure de la première grandeur physique généré par le premier élément sensible 11 est modifié par les variations de la deuxième grandeur physique.

Le capteur 1 comprend également une mémoire 13 situé dans le corps de capteur 10 et sur laquelle est enregistrée une table de compensation qui détermine une valeur corrigée de la première grandeur physique en fonction de la valeur mesurée de la première grandeur physique par le premier élément sensible 11 et de la valeur mesurée de la deuxième grandeur physique par le deuxième élément sensible 12. La mémoire 13 peut par exemple être une mémoire flash.

La table de compensation est réalisée à partir de la dérive du premier élément sensible 11 par rapport à la deuxième grandeur physique.

Le capteur 1 comprend en outre une unité de traitement 14 située dans le corps de capteur 10 et qui est reliée au premier élément sensible 11, au deuxième élément sensible 12, et à la mémoire 13. L'unité de traitement 14 est configurée pour générer un signal de mesure du capteur 1, à partir du signal de mesure du premier élément sensible 11, du signal de mesure du deuxième élément sensible 12, et de la table de compensation enregistrée sur la mémoire 13, ledit signal de mesure du capteur 1 correspondant à la valeur de la première grandeur physique corrigée de l'influence de la deuxième grandeur physique. L'unité de traitement 14 peut par exemple être un processeur, ou bien un circuit logique programmable (FGPA).

Le fait que l'unité de traitement 14 détermine la valeur corrigée de la première grandeur physique à partir d'une table de compensation qui est enregistrée sur la mémoire préalablement au fonctionnement du capteur 1 permet d'éviter une étape de calcul de la part de l'unité de traitement 14, augmentant ainsi la rapidité à laquelle le signal de mesure du capteur 1 est généré. En effet, l'unité de traitement 14 n'a besoin que de lire les valeurs des première et deuxième grandeurs physiques mesurées respectivement par les premier et deuxième éléments sensibles 11 et 12, et d'identifier dans la table de compensation la valeur corrigée associées aux valeurs mesurées lues.

Comme cela est illustré sur la figure 1, le capteur 1 est destiné à être relié à un système de contrôle 2, qui est par exemple un système de contrôle 2 d'un véhicule, le véhicule pouvant par exemple être un lanceur spatial ou un aéronef. Le signal de mesure du capteur 1 reçu par le système de contrôle 2 est directement la valeur corrigée de la première grandeur physique, et ainsi d'une part le système de contrôle 2 n'a plus besoin de faire de calcul de compensation, et d'autre part il n'est plus nécessaire de rentrer les données du capteur 1 dans le système de contrôle 2.

En outre, comme visible sur la figure 1, le système de contrôle 2 peut être relié à une pluralité de capteurs 1 qui possèdent une structure identique au capteur 1 détaillé précédemment, afin de mesurer la première grandeur physique à différents endroits, et/ou afin d'avoir des redondances.

Selon l'invention, le capteur 1 comprend au moins un composant chauffant 15 qui peut être situé dans le corps de capteur 10 et qui est configuré pour chauffer l'unité de traitement 14. Le composant chauffant 15 peut par exemple être une résistance qui produit de la chaleur sous l'effet du courant électrique qui la traverse. Le capteur 1 comprend également un capteur de température 16 qui est situé dans le corps de capteur 10 et qui est configuré pour mesurer la température de l'unité de traitement 14. L'unité de traitement 14 est reliée d'une part au composant chauffant 15, et d'autre part au capteur de température 16. L'unité de traitement 14 est configurée pour contrôler le composant chauffant 15 pour que ledit composant chauffant 15 maintienne la température de ladite unité de traitement 14 au-dessus d'une valeur seuil. Une telle caractéristique est avantageuse lorsque le capteur 1 est soumis à des températures très basses, comme par exemple lorsque le capteur 1 est destiné à mesurer la pression dans un réservoir de gaz liquide, comme par exemple du dioxygène liquide ou du dihydrogène liquide. La valeur seuil correspond à la température minimale à laquelle l'unité de traitement 14 peut fonctionner, la température minimale de fonctionnement de ladite unité de traitement 14 variant suivant le matériel utilisé. A titre d'exemple, la valeur seuil peut être de -55°C.

De manière avantageuse, le composant chauffant 15 est également configuré pour chauffer la mémoire 13, afin d'assurer que la mémoire 13 reste au-dessus de sa température minimale de fonctionnement. Un capteur de température peut être disposé à proximité de la mémoire 13 afin de mesurer la température de ladite mémoire 13, l'unité de traitement 14 chauffant la mémoire 13 avec le composant chauffant 15 en fonction de la température mesurée par ce capteur de température.

En outre, afin d'améliorer la chaleur créée par la au moins une résistance et la répartition de cette chaleur sur l'unité de traitement 14, ladite au moins une résistance peut être noyée dans film dissipatif qui entoure l'unité de traitement 14. Le film dissipatif peut par exemple être en polyimide (du kapton) qui offre l'avantage d'avoir une bonne tenue en température. D'autres matériaux peuvent toutefois être utilisés pour former le film dissipatif. Le film dissipatif peut également entourer la mémoire 13 si le composant chauffant 15 est configuré pour chauffer ladite mémoire 13.

Le premier élément sensible 11 génère un premier signal de mesure qui est analogique, et le deuxième élément sensible 12 génère un deuxième signal de mesure qui est également analogique. Comme cela est illustré sur la figure 1, le capteur 1 comprend un premier convertisseur analogique/numérique 17a (CAN) qui permet d'une part de convertir le premier signal de mesure analogique en un premier signal de mesure numérique et d'autre part de transférer ledit premier signal de mesure numérique à l'unité de traitement 14. Le capteur 1 comprend également un deuxième convertisseur analogique/numérique 18a (CAN) qui permet d'une part de convertir le deuxième signal de mesure analogique en un deuxième signal de mesure numérique et d'autre part de transférer ledit deuxième signal de mesure numérique à l'unité de traitement 14.

L'unité de traitement 14 réalise la compensation de la mesure de la première grandeur physique avec des signaux numériques, et peut transmettre un signal numérique au système de contrôle 2, ce qui permet de simplifier et d'augmenter la précision de la mesure reçue par le système de contrôle 2 par rapport à une transmission d'un signal analogique. Le fait que le signal de mesure du capteur 1 soit transmis sous forme numérique permet également de réduire la masse et l'encombrement des câbles reliant ledit capteur 1 au système de contrôle 2, ce qui est particulièrement avantageux dans le domaine aérospatiale ou le domaine de l'aéronautique. En outre, le système de contrôle 2 ne limite plus la performance des capteurs 1 car il n'a plus de calcul à réaliser, le système de contrôle 2 se contentant de lire les valeurs transmises par les capteurs 1.

L'unité de traitement 14 peut toutefois comprendre un convertisseur numérique/analogique (CNA) afin de transmettre le signal de mesure du capteur 1 sous forme analogique.

Le composant chauffant 15 peut également être configuré pour chauffer le premier convertisseur analogique/numérique 17a et/ou le deuxième convertisseur analogique/numérique 18a.

En outre, le capteur 1 peut également comprendre un premier composant de filtrage et d'amplification 17b qui est relié d'une part au premier élément sensible 11 et d'autre part au premier convertisseur analogique/numérique 17a, et qui permet de filtrer et amplifier le premier signal de mesure analogique avant sa conversion en premier signal de mesure numérique par ledit premier convertisseur analogique/numérique 17a. Le capteur 1 peut en outre comprendre un deuxième composant de filtrage et d'amplification 18b qui est relié d'une part au deuxième élément sensible 12 et d'autre part au deuxième convertisseur analogique/numérique 18a, et qui permet de filtrer et amplifier le deuxième signal de mesure analogique avant sa conversion en deuxième signal de mesure numérique par ledit deuxième convertisseur analogique/numérique 18a.

Le premier composant de filtrage et d'amplification 17b et/ou le deuxième composant de filtrage et d'amplification 18b peut être configuré pour filtrer les interférences électromagnétiques avant l'amplification du signal. Le premier composant de filtrage d'amplification 17b et/ou le deuxième composant de filtrage et d'amplification 18b peut également être configuré pour filtrer les hautes fréquences (filtre passe-bas) après l'amplification du signal afin de réduire le bruit.

Le composant chauffant 15 peut également être configuré pour chauffer le premier composant de filtrage et d'amplification 17b et/ou le deuxième composant de filtrage et d'amplification 18b.

Selon un mode de réalisation possible, l'invention peut être appliquée pour les capteurs de pression qui sont influencés par la température. Ainsi, dans cette application, la première grandeur physique est la pression, et la deuxième grandeur physique est la température. L'invention peut également être appliquée à d'autres grandeurs physiques, la première grandeur physique pouvant par exemple être l'accélération et la deuxième grandeur physique la température.

Dans la variante de réalisation illustrée sur la figure 2, un capteur de pression 3 comprend un corps de capteur 30. Le corps de capteur 30 comprend une ligne d'entrée pour un fluide (liquide ou gaz) dont la pression est à mesurer à une première extrémité 30a (prise de pression), et sortie de liaison à une deuxième extrémité 30b qui permet de relier le capteur de pression 3 à un système de contrôle, la deuxième extrémité 30b permettant par exemple de faire passer un connecteur.

Le capteur de pression 3 comprend une membrane 31 qui est configurée pour se déformer sous l'effet de la pression du fluide qui entre dans le capteur de pression 3. La membrane 31 peut être réalisée en métal.

Le capteur de pression 3 comprend un élément sensible à la pression 32 formé par une jauge de déformation qui est située sur la membrane 31 et qui permet de mesurer la pression du fluide en mesurant la déformation de la membrane 31. L'élément sensible à la pression 32 peut par exemple être un élément sensible à couche mince à jauges extensométriques qui est formé par des résistances formant un pont de Wheatstone, ou selon un autre exemple l'élément sensible à la pression 32 peut être un microsystème électromécanique (MEMS). L'élément sensible à la pression 32 en microsystème électromécanique (MEMS) peut par exemple être un microsystème piézo-électrique, ou selon un autre exemple possible un microsystème piézo-résistif. Lorsque l'élément sensible à la pression 32 est formé par un pont de Wheatstone, le premier élément sensible à la pression 32 peut comprendre un circuit de compensation qui permet de compenser la différence de valeur de résistance entre les quatre résistances formant le pont de Wheatstone.

Le capteur de pression 3 comprend un élément sensible à la température 33 qui est également situé sur la membrane 31 et qui permet de mesurer la température de l'élément sensible à la pression 32. L'élément sensible à la température 33 peut par exemple être formé par une première résistance (ou une première paire de résistances) en matériau dont la valeur de résistance varie en fonction de la température (par exemple du platine), et une deuxième résistance (ou une deuxième paire de résistances) en matériau dont la valeur de résistance ne varie pas en fonction de la température (par exemple un alliage de Nickel-Chrome). De préférence, afin que l'élément sensible à la température 33 ne soit pas soumis aux déformations de la membrane 31, l'élément sensible à la température 33 est situé sur la périphérie de la membrane 31, là où la membrane 31 est encastrée et reste immobile.

Le signal de mesure généré par l'élément sensible à la pression 32 est modifié par les variations de la température.

Comme illustré sur la figure 2, le capteur de pression 3 comprend un circuit 34 situé à l'intérieur du corps de capteur 30 et sur lequel sont disposés une unité de traitement 35 qui est reliée à l'élément sensible à la pression 32 et à l'élément sensible à la température 33, ainsi qu'une mémoire 36 reliée à l'unité de traitement 35 et dans laquelle la table de compensation est enregistrée.

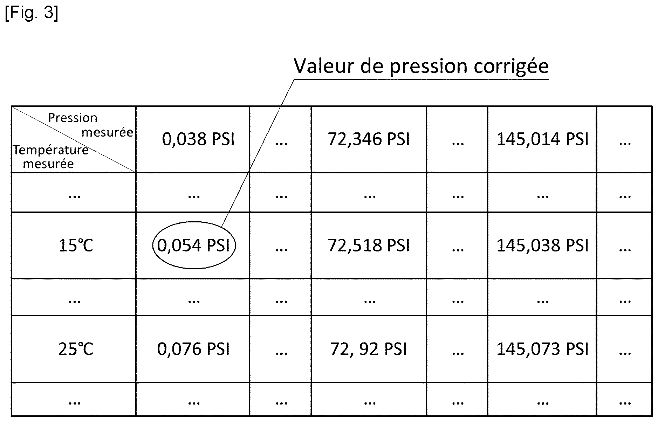

La figure 3 illustre schématiquement la table de compensation qui est enregistrée sur la mémoire 36. L'unité de traitement 35 utilise la table de compensation en lisant d'une part la valeur de pression mesurée par l'élément sensible à la pression 32, et d'autre part la valeur de température mesurée par l'élément sensible à la température 33, et en déterminant la valeur de pression corrigée associée aux valeurs lues.

L'invention permet ainsi de fournir une solution simple permettant de mesurer de manière précise une première grandeur physique, comme par exemple une pression ou une accélération, en compensant la mesure du capteur en prenant en compte une deuxième grandeur physique, comme par exemple la température du capteur.

## Revendications

1. Capteur (1) pour la mesure d'une première grandeur physique dont la mesure est influencée par une deuxième grandeur physique, ledit capteur (1) comprenant un corps de capteur (10) à l'intérieur duquel sont installés :
- un premier élément sensible (11) configuré pour mesurer la première grandeur physique ;
- un deuxième élément sensible (12) configuré pour mesurer la deuxième grandeur physique ;
- une mémoire (13) sur laquelle est enregistrée une table de compensation qui détermine une valeur corrigée de la première grandeur physique en fonction de la valeur mesurée de la première grandeur physique par le premier élément sensible (11) et de la valeur mesurée de la deuxième grandeur physique par le deuxième élément sensible (12) ;
- une unité de traitement (14) qui est reliée au premier élément sensible (11), au deuxième élément sensible (12) et à la mémoire (13), l'unité de traitement (14) étant configurée pour générer un signal de mesure du capteur (1) correspondant à la valeur corrigée de la première grandeur physique à partir de la valeur mesurée de la première grandeur physique par le premier élément sensible (11), de la valeur mesurée de la deuxième grandeur physique par le deuxième élément sensible (12), et de la table de compensation,
ledit capteur (1) étant **caractérisé en ce qu'**il comprend également un composant chauffant (15) qui est configuré pour chauffer l'unité de traitement (14) et un capteur de température (16) qui est configuré pour mesurer la température de l'unité de traitement (14), le composant chauffant (15) et le capteur de température (16) étant reliés à l'unité de traitement (14), l'unité de traitement (14) étant configurée pour contrôler ledit composant chauffant (15) pour maintenir la température de l'unité de traitement (14) supérieure à une valeur seuil.

2. Capteur (1) selon la revendication 1, dans lequel le composant chauffant (15) comprend au moins une résistance, l'unité de traitement (14) étant configurée pour contrôler l'alimentation électrique de la résistance pour maintenir la température de l'unité de traitement (14) supérieure à la valeur seuil.

3. Capteur (1) selon la revendication 2, dans lequel la au moins une résistance est noyée dans un film dissipatif entourant l'unité de traitement (14).

4. Capteur (1) selon l'une quelconque des revendications 1 à 3, dans lequel ledit capteur est un capteur de pression (3), la première grandeur physique étant une pression et la deuxième grandeur physique étant une température du premier élément sensible.

5. Capteur (1) selon la revendication 4, dans lequel le premier élément sensible est un élément sensible à couche mince à jauges extensométriques ou un microsystème électromécanique.

6. Capteur (1) selon la revendication 5, dans lequel le premier élément sensible comprend quatre résistances formant un pont de Wheatstone, le premier élément sensible comprenant également un circuit de compensation pour compenser la différence de valeur de résistance entre les résistances de pont de Wheatstone.

7. Capteur (1) selon l'une quelconque des revendications 1 à 6, dans lequel le premier élément sensible (11) génère un premier signal de mesure analogique et le deuxième élément sensible (12) génère un deuxième signal de mesure analogique, le capteur (1) comprenant un premier convertisseur analogique/numérique (17a) qui est configuré pour convertir le premier signal de mesure analogique en un premier signal de mesure numérique et transmettre ledit premier signal de mesure numérique à l'unité de traitement (14), le capteur (1) comprenant également un deuxième convertisseur analogique/numérique (18a) qui est configuré pour convertir le deuxième signal de mesure analogique en un deuxième signal de mesure numérique et transmettre ledit deuxième signal de mesure numérique à l'unité de traitement (14).

8. Capteur (1) selon la revendication 7, dans lequel le capteur (1) comprend un premier composant de filtrage et d'amplification (17b) qui est configuré pour filtrer et amplifier le premier signal de mesure analogique avant la conversion analogique/numérique dudit premier signal de mesure, et un deuxième composant de filtrage et d'amplification (18b) qui est configuré pour filtrer et amplifier le deuxième signal de mesure analogique avant la conversion analogique/numérique dudit deuxième signal de mesure.

## Patentansprüche

1. Sensor (1) zum Messen einer ersten physikalischen Größe, deren Messung durch eine zweite physikalische Größe beeinflusst wird, wobei der Sensor (1) einen Sensorkörper (10) umfasst, in dessen Innerem installiert sind:
- ein erstes Sensorelement (11), das dazu ausgestaltet ist, die erste physikalische Größe zu messen,
- ein zweites Sensorelement (12), das dazu ausgestaltet ist, die zweite physikalische Größe zu messen,
- ein Speicher (13), in dem eine Kompensationstabelle aufgezeichnet ist, die einen korrigierten Wert der ersten physikalischen Größe als Funktion des von dem ersten Sensorelement (11) gemessenen Werts der ersten physikalischen Größe und des von dem zweiten Sensorelement (12) gemessenen Werts der zweiten physikalischen Größe bestimmt,
- eine Verarbeitungseinheit (14), die mit dem ersten Sensorelement (11), dem zweiten Sensorelement (12) und dem Speicher (13) verbunden ist, wobei die Verarbeitungseinheit (14) dazu ausgestaltet ist, ein Messsignal des Sensors (1) zu erzeugen, das dem korrigierten Wert der ersten physikalischen Größe ausgehend von dem von dem ersten Sensorelement (11) gemessenen Wert der ersten physikalischen Größe, dem von dem zweiten Sensorelement (12) gemessenen Wert der zweiten physikalischen Größe und der Kompensationstabelle entspricht,
wobei der Sensor (1) **dadurch gekennzeichnet ist, dass** er auch eine Heizkomponente (15) umfasst, die dazu ausgestaltet ist, die Verarbeitungseinheit (14) zu beheizen, und einen Temperatursensor (16), der dazu ausgestaltet ist, die Temperatur der Verarbeitungseinheit (14) zu messen, wobei die Heizkomponente (15) und der Temperatursensor (16) mit der Verarbeitungseinheit (14) verbunden sind, wobei die Verarbeitungseinheit (14) dazu ausgestaltet ist, die Heizkomponente (15) zu steuern, um die Temperatur der Verarbeitungseinheit (14) oberhalb eines Schwellenwerts zu halten.

2. Sensor (1) nach Anspruch 1, wobei die Heizkomponente (15) zumindest einen Widerstand umfasst, wobei die Verarbeitungseinheit (14) dazu ausgestaltet ist, die elektrische Versorgung des Widerstands zu steuern, um die Temperatur der Verarbeitungseinheit (14) oberhalb des Schwellenwerts zu halten.

3. Sensor (1) nach Anspruch 2, wobei der zumindest eine Widerstand in eine dissipative Folie eingebettet ist, welche die Verarbeitungseinheit (14) umgibt.

4. Sensor (1) nach einem der Ansprüche 1 bis 3, wobei der Sensor ein Drucksensor (3) ist, die erste physikalische Größe ein Druck ist und die zweite physikalische Größe eine Temperatur des ersten Sensorelements ist.

5. Sensor (1) nach Anspruch 4, wobei das erste Sensorelement ein Dünnschicht-Sensorelement mit Dehnungsmesselementen oder ein elektromechanisches Mikrosystem ist.

6. Sensor (1) nach Anspruch 5, wobei das erste Sensorelement vier Widerstände umfasst, die eine Wheatstone-Brücke bilden, wobei das erste Sensorelement auch eine Kompensationsschaltung umfasst, um die Differenz des Widerstandswerts zwischen den Widerständen der Wheatstone-Brücke zu kompensieren.

7. Sensor (1) nach einem der Ansprüche 1 bis 6, wobei das erste Sensorelement (11) ein erstes analoges Messsignal erzeugt und das zweite Sensorelement (12) ein zweites analoges Messignal erzeugt, der Sensor (1) einen ersten Analog-DigitalWandler (17a) umfasst, der dazu ausgestaltet ist, das erste analoge Messsignal in ein erstes digitales Messsignal umzuwandeln und das erste digitale Messignal an die Verarbeitungseinheit (14) zu senden, und der Sensor (1) auch einen zweiten Analog-Digital-Wandler (18a) umfasst, der dazu ausgestaltet ist, das zweite analoge Messsignal in ein zweites digitales Messsignal umzuwandeln und das zweite digitale Messignal an die Verarbeitungseinheit (14) zu senden.

8. Sensor (1) nach Anspruch 7, wobei der Sensor (1) eine erste Filter- und Verstärkungskomponente (17b), die dazu ausgestaltet ist, das erste analoge Messsignal vor der Analog-Digital-Wandlung des ersten Messsignals zu filtern und zu verstärken, und eine zweite Filter- und Verstärkungskomponente (18b) umfasst, die dazu ausgestaltet ist, das zweite analoge Messsignal vor der Analog-Digital-Wandlung des zweiten Messsignals zu filtern und zu verstärken.

## Claims

1. A sensor (1) for measuring a first physical quantity whose measurement is influenced by a second physical quantity,
said sensor (1) comprising a sensor body (10) inside which are installed:
- a first sensitive element (11) configured to measure the first physical quantity;
- a second sensitive element (12) configured to measure the second physical quantity;
- a memory (13) on which is recorded a compensation table which determines a corrected value of the first physical quantity as a function of the value of the first physical quantity measured by the first sensitive element (11) and of the value of the second physical quantity measured by the second sensitive element (12);
- a processing unit (14) which is connected to the first sensitive element (11), to the second sensitive element (12) and to the memory (13), the processing unit (14) being configured to generate a measurement signal of the sensor (1) corresponding to the corrected value of the first physical quantity from the value of the first physical quantity measured by the first sensitive element (11), from the value of the second physical quantity measured by the second sensitive element (12), and from the compensation table,
said sensor (1) being **characterized in that** it also comprises a heating component (15) which is configured to heat the processing unit (14) and a temperature sensor (16) which is configured to measure the temperature of the processing unit (14), the heating component (15) and the temperature sensor (16) being connected to the processing unit (14), the processing unit (14) being configured to control said heating component (15) to maintain the temperature of the processing unit (14) above a threshold value.

2. The sensor (1) according to claim 1, wherein the heating component (15) comprises at least one resistor, the processing unit (14) being configured to control the electrical supply of the resistor in order to maintain the temperature of the processing unit (14) above the threshold value.

3. The sensor (1) according to claim 2, wherein the at least one resistor is embedded in a dissipative film surrounding the processing unit (14).

4. The sensor (1) according to any one of claims 1 to 3, wherein said sensor is a pressure sensor (3), the first physical quantity being a pressure and the second physical quantity being a temperature of the first sensitive element.

5. The sensor (1) according to claim 4, wherein the first sensitive element is a thin-layer sensitive element with strain gauges or an electromechanical microsystem.

6. The sensor (1) according to claim 5, wherein the first sensitive element comprises four resistors forming a Wheatstone bridge, the first sensitive element also comprising a compensation circuit for compensating the difference in the resistance value between the Wheatstone Bridge resistors.

7. The sensor (1) according to any one of claims 1 to 6, wherein the first sensitive element (11) generates a first analog measurement signal and the second sensitive element (12) generates a second analog measurement signal, the sensor (1) comprising a first analog/digital converter (17a) which is configured to convert the first analog measurement signal into a first digital measurement signal and transmit said first digital measurement signal to the processing unit (14), the sensor (1) also comprising a second analog/digital converter (18a) which is configured to convert the second analog measurement signal into a second digital measurement signal and transmit said second digital measurement signal to the processing unit (14).

8. The sensor (1) according to claim 7, wherein the sensor (1) comprises a first filtering and amplification component (17b) which is configured to filter and amplify the first analog measurement signal before the analog/digital conversion of said first measurement signal, and a second filtering and amplification component (18b) which is configured to filter and amplify the second analog measurement signal before the analog/digital conversion of said second measurement signal.
